# EUROPEAN PATENT APPLICATION

(11) **EP 1 122 160 A1**
(43) Date of publication of application: **08.08.2001**
(21) Application number: 00939143.4
(22) Date of filing: 23.06.2000
(51) Int. Cl.: B62K 25/20

(54) **SWING ARM FOR MOTORCYCLE AND METHOD OF MANUFACTURING THE SWING ARM FOR MOTORCYCLE**

(30) Priority: 23.06.1999 JP 17736399
(71) Applicant: TS Tech Co., Ltd, Asaka-shi, Saitama 351-0012 (JP)
(72) Inventor: MIYAJIMA, Iwao, Niiza-shi, Saitama 352-0016 (JP)
(74) Representative: Schuster, Thomas, Dipl.-Phys.
(86) International application number: JP0004137
(87) International publication number: WO0078596

(57) **Abstract**

A swing arm (S) for motorcycle, comprising a pair of arm parts (10) pivotally mounted on a body frame and a body part (20) connecting the pair of arm parts (10) to each other, wherein the arm part (10) and the body part (20) have hollow parts, and foam resin is filled into at least a part of the hollow parts of the arm part (10) and body part (20).

## Description

### TECHNICAL FIELD

The present invention relates to a swing arm for a two-wheeled motor vehicle, and more particularly relates to a swing arm for preventing an abnormal sound which may be produced due to resonance with vibrations of an engine, and relates to a method of producing the swing arm.

### TECHNICAL BACKGROUND

A two-wheeled motor vehicle, such as a motorcycle, has a suspension device provided therewith for not transmitting vertical movements of tires due to irregular road surfaces to the body of the motor vehicle and to a rider thereon, and for sufficiently transmitting the driving force of an engine to a road surface through the rear wheel. A suspension device is generally provided at both the front and rear sides of the vehicle body.

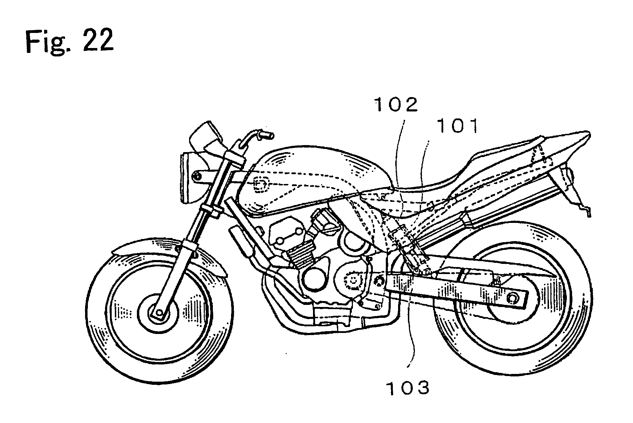

The suspension device provided at the rear side is, as shown in Fig. 22, composed of a spring 101 for receiving a load, a shock absorber 102 for absorbing vibrations produced by the reaction force of the spring, and a swing arm 103 positioning the movements of the wheel.

The swing arm 103 is composed of a pair of arm portions pivotally mounted to the frame of the vehicle and a body portion connecting the pair of arms. The arm portion is generally made of an elongated member of an aluminum drawn tube which is widened in the vertical direction with respect to the vehicle for providing stiffness thereto. The body portion is cast aluminum with a hollow part molded in the form of a box through a vertical pair of casting die.

The swing arm is formed so as to have sufficient stiffness and is made of a metal, for example, aluminum. A technique is known by which the swing arm is provided with a hollow part therein to reduce the weight. However when the swing arm is provided with the hollow portion, it has been inconvenient because the wall surrounding the hollow portion resonates with the vibrations from the engine and produces noise during running because the swing arm is disposed in the vicinity of the engine of the two-wheeled motor vehicle.

To eliminate such inconvenience, swing arms of such structures have been provided with a rib extending from an upper part of the body to a lower part thereof for connecting the upper and lower parts to increase the strength and control vibrations. Otherwise, an inner wall is provided within the hollow portion of the arm or the body portions so as to control the vibrations in the arm or body portions and prevent the swing arm from resonating with the vibrations from the engine.

However for fabricating swing arms having such structures, it is required to provide a rib or an inner wall. This makes the shape of the casting die complicated and increases the casting steps. Further, it is required to form a rib or inner wall at the arm portion or the body portion in balanced condition, which makes the production troublesome and is more costly.

### DISCLOSURE OF THE INVENTION

Thepresent invent ion has been made to eliminate the problems and disadvantages mentioned above. It is accordingly an object of the invention to provide a swing arm for a two-wheeled motor vehicle which is simple in structure and is effective for preventing resonance with vibrations from the engine.

The invention will be explained in accordance with claimed embodiments.

The swing arm of the invention is disposed at the rear part of the two-wheeled motor vehicle, and is provided with a pair of arm potions pivotally mounted to the frame of the vehicle and a body portion connecting the pair of arm portions.

The hollow parts of the arm portions and the body potion of the instant swing arm are filled with the foam resin.

Because of the foam resin in the hollow parts of the arm portions and the body portion composing the swing arm, when a vibration is transmitted from the engine to the swing arm, the foam resin absorbs the vibration so that the arm portions and the body portion are not vibrated, thus preventing the resonance.

The foam resin may fill up the hollow portions of the arm portions and the body portion as exemplified or just the part of the swing arm where the resonance is most easily generated.

The foam resin used to fill the hollow portions can be, for example, urethane foam, polypropylene foam, polystyrene foam, polyethylene foam, acrylonitrile-stylene resin foam, gum-based foam, or urethane foam having gum-based particles. Or, at least two or more of the following may be used in combination urethane foam, polypropylene foam, polystyrene foam, polyethylene foam, acrylonitrile-stylene resin foam, gum-based foam, and urethane foam having gum-based particles. These foam resins have excellent resistance to heat generated from the engine and to oil products such as gasoline and are also excellent in terms of cost and endurance. Further, having respectively different qualities, these foam resins may be optionally used in accordance with the structure of the two-wheeled motor vehicle, the volume of the engine or other requirements.

If the urethane foam to be used has a density from 0.010 to 0.100, it is possible to effectively control the resonance due to the engine vibrations. Further, urethane foam having gum-based (solid) particles can exhibit an excellent function. In this case, the density of the foam product is preferably from 0.050 to 0.500.

A method of producing the swing arm of this invention is as follows.

The swing arm for a two-wheeled motor vehicle has hollow portions in the arm portions and in the body portion, and a part or all of the hollow portions are filled with a foam resin. The production method of this swing arm includes a process for introducing a quantity of the raw material of the foam resin in the hollow portions and a process for foaming the introduced raw material.

The raw material of the foam resin is introduced through threaded openings formed in the swing arm for attachment to the vehicle or through openings provided at the end sides of the swing arm. Therefore, there is no need to provide specific openings for introducing the raw material.

Another production method for the two-wheeled motor vehicle swing arm in this invention is as follows.

This method fills at least a part of the hollow portions with a previously molded and foamed material. Chips of previouslymoldedfoammaterial, agum-basedfoam, or a synthetic gum material are inserted into the hollow portion of the swing arm, thereby reducing the production steps and increasing the production efficiency. Also, in this case, as the chips of the foam material are inserted into the opening for attaching members to the vehicle as mentioned above, it is not necessary to specifically and separately provide an opening.

### BRIEF DESCRIPTION OF THE DRAWINGS

Fig. 1 shows explanatory views of the swing arm filled with the foam resin;
Fig. 2 shows an enlarged view of an essential part of Fig. 1;
Fig. 3 shows an enlarged view of an essential part of Fig. 1;
Fig. 4 shows an explanatory view of a jig to be used for filling with expandable beads;
Fig. 5 shows an explanatory view of a jig to be used for filling with expandable beads;
Fig. 6 shows an explanatory view of a procedure for filling with expandable beads;
Fig. 7 shows an explanatory view of a procedure for filling with expandable beads;
Fig. 8 shows an explanatory view of a procedure for filling with expandable beads;
Fig. 9 shows an explanatory view of a procedure for filling with expandable beads;
Fig. 10 shows an explanatory view of the procedure for filling with expandable beads;
Fig. 11 shows an explanatory view of the procedure for filling with expandable beads;
Fig. 12 shows an explanatory view of another jig for filling with expandable beads;
Fig. 13 shows an explanatory view of another method for filling with expandable beads;
Fig. 14 shows an explanatory view of another method for filling with expandable beads;
Fig. 15 shows an explanatory view of another method for filling with expandable beads;
Fig. 16 shows an explanatory view of another method for filling with expandable beads;
Fig. 17 shows an explanatory view of another method for filling with expandable beads;
Fig. 18 shows an explanatory view of the swing arm to be used in the embodiments shown in Figs. 12 through 17;
Fig. 19 shows explanatory views of another jig and a process for filling with resin foam such as urethane foam;
Fig. 20 shows an enlarged view of the jig shown in Fig. 19;
Fig. 21 shows an explanatory view of another method for filling with resin foam such as urethane foam; and
Fig. 22 shows an explanatory view of a motorcycle having a general swing arm.

### MOST PREFERRED EMBODIMENTS FOR PRACTICING THE INVENTION

An embodiment of the invention will be described with reference to the attached drawings. The materials and layouts used in this invention are not restricted to those described in this specification; they may be modified within the scope of the invention.

A swing arm S for a two-wheeled motor vehicle according to the embodiment is used as a rear fork of a two-wheeled motor vehicle such as a motorcycle and is composed of a pair of arm portions 10 and a body portion 20 located between the two arm portions 10. The arm portions are pivotally connected at one end thereof to the frame of the motor vehicle (not shown) and may be able to tilt with respect to the frame. The opposite ends of the arm portions 10 support the rear wheel (not shown) of the motor vehicle.

The arm portions 10 are elongated and generally square-shaped in vertical cross section and are formed with a projection 11 extending downward from the vehicle body so as to secure stiffness. Further, one of the arm portions 10 has a pivot pipe 10b welded to its end, said pivot pipe being designed to engage a shaft member (not shown) provided at the vehicle frame. Further, the other one of the arm portions 10 has an end piece 10d welded to the opposite end thereof, said end piece being formed with a rear wheel 10c.

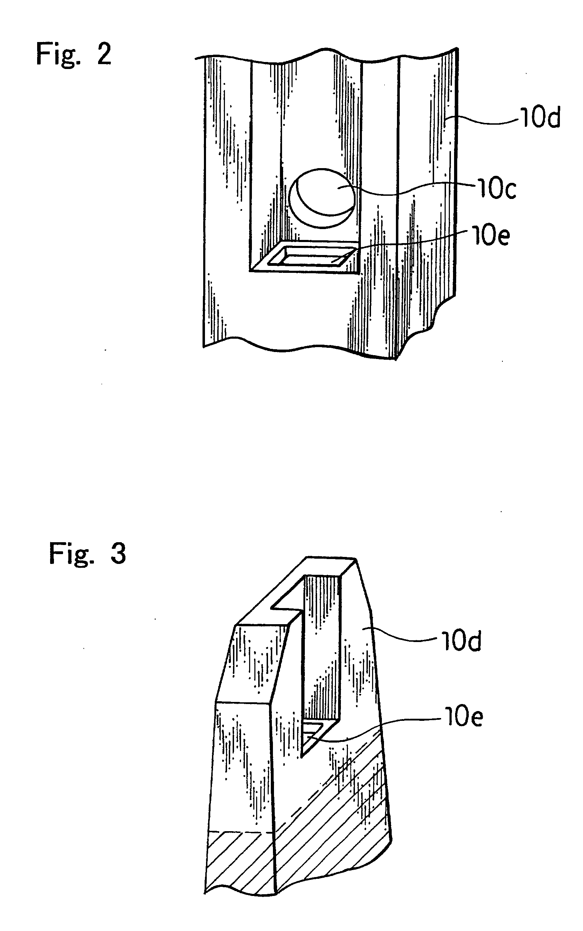

As shown in Fig. 2, the arm portions 10 have an opening 10e at one end of the end piece 10d for attaching a member to the arm portions. As shown in Figs. 2 and 3, in case the foam resin is formed by means of foaming beads, the opening 10e is used to introduce the beads-foaming material and steam. Further, the opening 10e may be also used to introduce the chips of previously formed foam material into the hollow portion.

The body portion 20 is formed with a bracket (not shown) projecting upward to be connected to a spring (not shown) of a suspension device. The body portion 20 is a hollow member connected to the arm portions 10 at the sides of the vehicle body.

The arm portions 10 and body portion 20 are formed as one body in a casting process or may be separately formed and connected by welding.

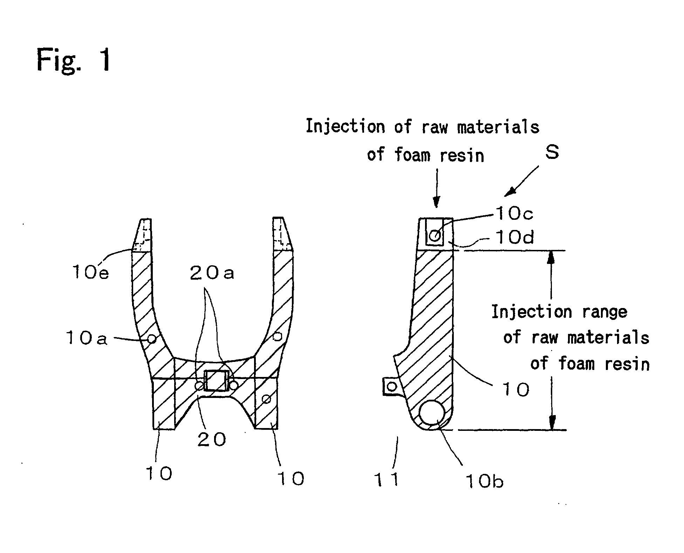

The arm portions 10 and body portion 20 have openings 10a and 20a provided at the upper side thereof as shown in Fig. 1. The openings 10a and 20a are used as the threaded openings for mounting the swing arm S to the vehicle body, and in this embodiment, the openings 10a and 20a are used as the openings for introducing the foam resin and steam into the hollow portion of the swing arm S, which will be mentioned later.

According to the present embodiment, the arm portions 10 and body portion 20 of the swing arm S are filled with the foam resin which has a good heat resistance. Namely, since the swing arm S is disposed in the vicinity of the engine of the two-wheeled motor vehicle, it is preferred that the foam resin will not be denatured due to the heat generated from the engine. Further, the foam resin having a good oil resistance is used so that it is not denatured by contact with gasoline or the like. It is more preferable that the foam resin is inexpensive and does not readily deteriorated.

To obtain foam resins satisfying the above-mentioned conditions, several sorts of raw materials have been examined and compared. The comparisons have been made with respect to heat resistance, oil resistance, cost, and endurance. As a result, it has been found that, the preferred foam resins are urethane foam, polypropylene foam, polystyrene foam, polyethylene foam, acrylonitrile-stylene resin foam, gum-based foam (cross-linked foam), and urethane foam having gum-based particles. Further, since these foam resins have inherently different qualities, suitable foam resins are selected in accordance with the structure and volume of the two-wheeled motor vehicle. For example, when the cost is important, a polystyrene foam is selected. When the heat is important, urethane foam, gum-based foam (cross-linked foam), urethane foam having gum-based particles, polyethylene foam, or polypropylene foam is selected. Further, these foam resins may be used in optional combinations.

Or, one or an optional combination of urethane foam, polypropylene foam, polystyrene foam, polyethylene foam, and acrylonitrile-stylene resin foam may be mixed with urethane foam having gum-based particles.

Especially, urethane foam is preferable with respect to heat resistance, oil resistance, and cost. Further, urethane foam is easily adhered to aluminum and has excellent mechanical properties for absorbing vibrations. Further, since the foaming rate may be comparatively delayed, urethane foam may easily be formed in the interior hollow portions of the arm portions 10 and body portion 20. To obtain such a preferable condition with urethane foam, the foam density should be from 0.010 to 0.100.

Further, gum-based foam or urethane foam having gum-based particles may be used to effectively prevent resonance with vibrations of the engine.

In the case of urethane foam mixed with gum-based urethane or urethane having gum-based particles, it is preferable to foam the raw urethane liquid to a density of 0.050 to 0.500.

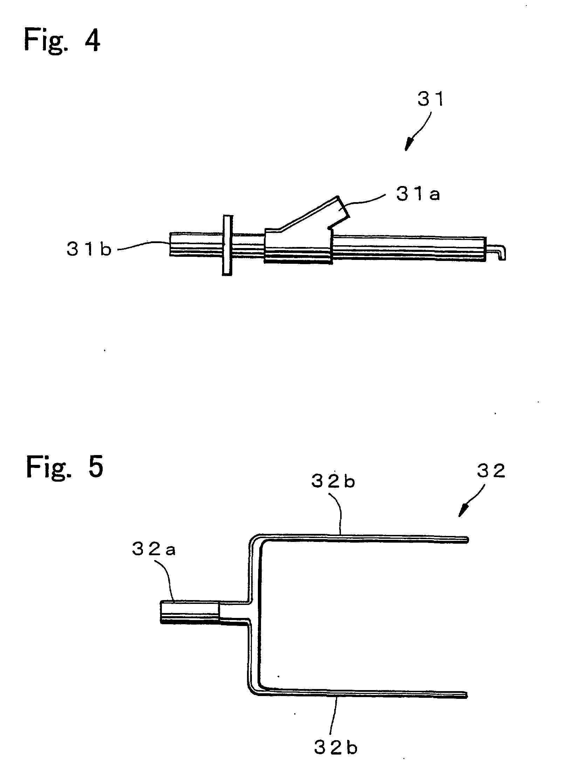

Now, the jigs and the method for filling the swing arm S for the two-wheeled motor vehicle with foaming resin beads will be explained with reference to Figs. 4 through 18. In the embodiments shown in Figs. 4 through 11, the explanation will be for an embodiment in which the foaming beads are introduced into the swing arm S and then heated by steam to form the foam resin. The foaming beads mentioned herein are pellets or particles having a foaming agent previously combined therewith. The foaming beads have excellent dispersion of foaming agent and form a uniformed cell structure.

For the jig for filling up with the foam resin, a material introducing jig 31 and steam injecting jig 32 are used as shown in Figs. 4 and 5. Said jig 31 is connected to a hose extending from a material tank and introduces the foaming beads to the swing arm S, and said jig 32 injects the steam for heating the foaming beads.

As shown in Fig. 4, the material introducing jig 31 has an connecting opening 31a to be connected to the hose extending from the material tank and a raw material exhaust opening 31b, which is engaged with the opening 10a provided at the arm potions 10 of the swing arm S.

As shown in Fig. 5, the steam injecting jig 32 has an opening 32a to be connected to a hose extending from a steam generator and a pair of steam pipes 32b to be inserted into the member attaching openings 10e of the swing arm S. The steam pipes 32b are provided with apertures for injecting the steam.

Next, the method for filling the interior hollow portions of the swing arm S with the foam resin by use of the jigs 31, 32 will be explained.

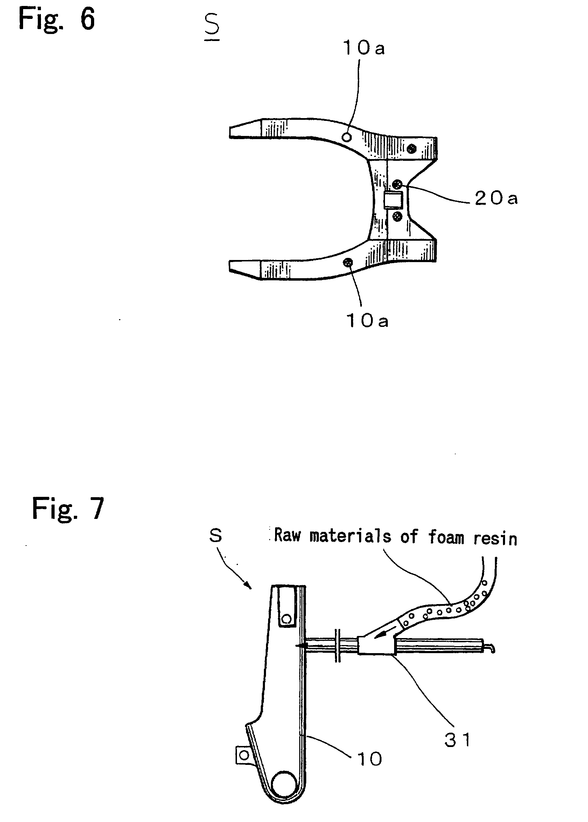

In the first step, as shown in Fig. 6, the openings 10a, 20a of the swing arm S are closed by a mesh sheet except the opening to be used for injecting the foaming beads. This is to prevent the foaming beads from leaking from the openings 10a and 20a. The closing of the openings by the mesh sheet allows the air to flow out, since the material filling machine is driven by compressed air so that the material flows by air pressure.

The second step is to introduce the foaming beads. As shown in Fig. 7, the rawmaterial exhaust opening 31b of the raw material introducing jig 31 is engaged with the opening 10a of the swing arm S which is not closed by the mesh sheet. Then, the material filling machine is operated to introduce the foaming beads.

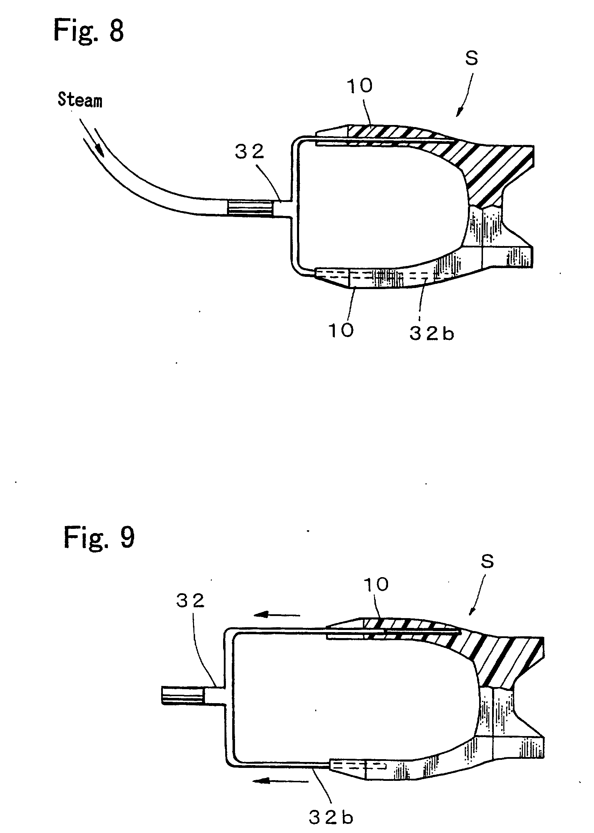

The third step is to inject the steam to heat and foam the foaming beads which have been introduced into the hollow portion of the swing arm S. The air is, as shown in Fig. 8, injected while the steam pipes 32b of the steam injecting jig 32 are inserted into the member attaching openings 10e. As shown in Fig. 9, when foaming is finished, the steam pipes 32b are pulled out from the swing arm S.

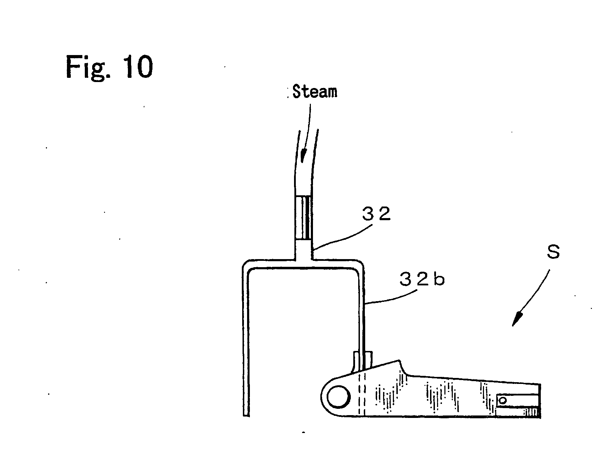

Where the foaming is not sufficient because of the distance from the steam pipes 32b of the steam injecting jig 32, the steam pipes 32b are inserted into the closer openings 10a or 20a to heat the foaming beads as shown in Fig. 10.

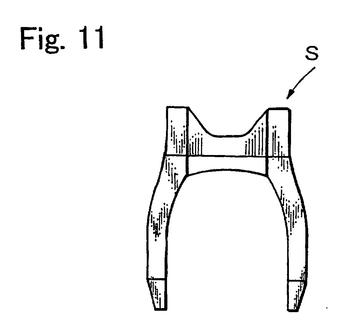

The fourth step is, as shown in Fig. 11, to turn down the side of the swing armS into which the steam pipes 32b are inserted to drain and dry the same. Thus, the swing arm S wherein the arm portions 10 and the body portion 20 are filled with the foam resin is manufactured.

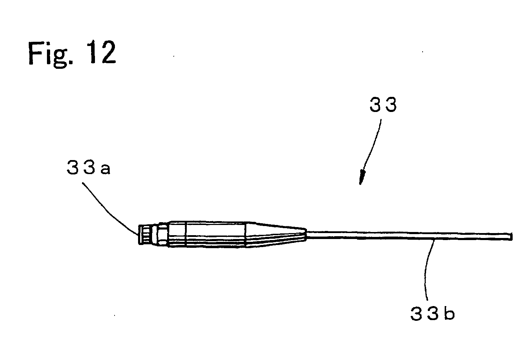

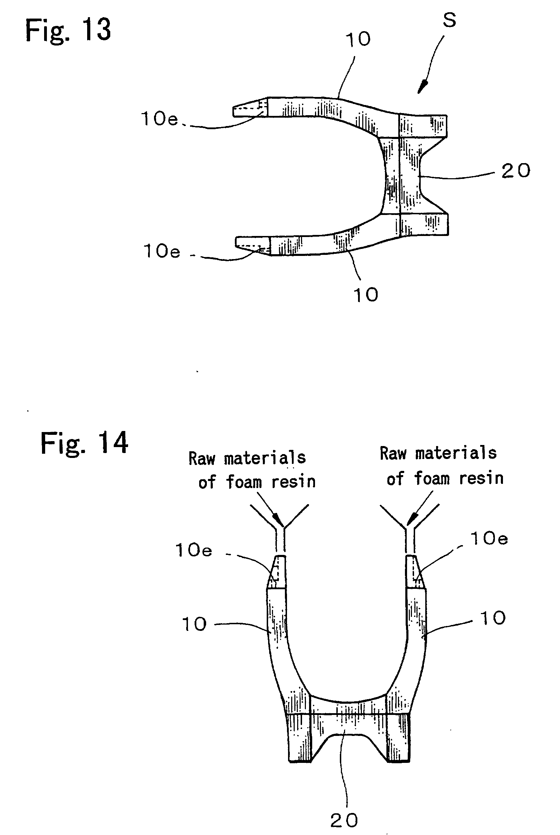

Figs. 12 through 17 show explanatory views of another embodiment of the jigs and the method for filling up the swing arm S with the foam resin. According to the embodiment shown in Figs. 12 through 17, opening 10a or 20a formed in the swing arm S is attached with a member. It is, therefore, impossible to introduce the raw material and inject the steam at the opening 10a or 20a. In this case, the material is introduced and the steam is injected through the member mounting opening 10e shown in Fig. 13.

In this embodiment, the foaming beads are manually introduced into the swing arm S, and only the steam injecting jig 33 shown in Fig. 12 is used. The steam injecting jig 33 has a connecting opening 33a which is connected to a hose extending from the steam generator and a steam pipe 33b which is inserted into the member mounting opening 10e of the swing armS. The steam pipe 33b has apertures for injecting the steam.

According to the present embodiment, since a member is attached to the opening 10a or 20a of the swing arm S, it is impossible to reheat a non-foamed place with inserting the steam pipe into a desired opening. Therefore the steam pipe 33b of the steam generator 33 is elongated so as to supply the steam to a terminal of the swing arm S.

Further reference will be made to a method for filling the hollow portion of the swing arm S with foam resin by use of the steam generator 33.

In the first step, in case the swing arm S has openings other than the opening for introducing the raw material, the openings are closed with a mesh sheet to prevent the foaming beads from leaking therefrom.

The second step is to introduce the foaming beads. The member mounting openings 10e are directed upward as shown in Fig. 14. Then the foaming beads are manually introduced into the swing arm S at the openings 10e.

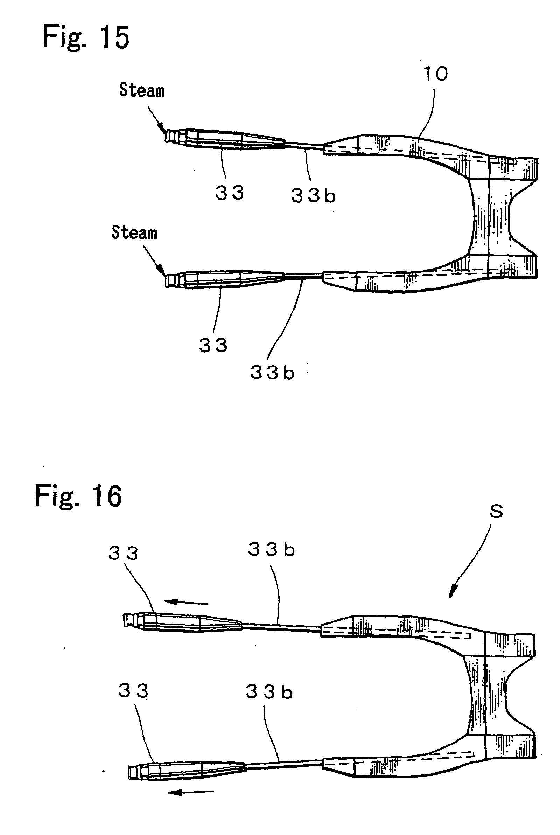

The third step is to inject the steam and then heat and foam the foaming beads which have been injected into the swing armS. The steam is, as shown in Fig.15, injected at the openings 10e through the steam pipe 33b of the steam generator 33 which is inserted into the openings 10e. When the foaming is finished, the steam pipe 33b is pulled out from the swing arm S as shown in Fig.16.

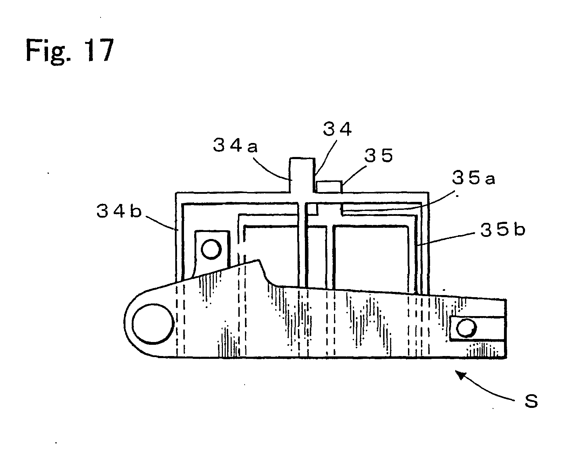

The fourth step is, as shown in Fig. 17, to turn down the side of the swing arm S where the steam pipe 33b was inserted to drain and dry the swing arm S. Thus, the swing arm S, wherein the arm portions 10 and the body portion 20 are filled with the foam resin is manufactured.

According to the above mentioned embodiment as shown in Fig. 1, the swing arm S has the arm portions 10 and the body portion 20, most part of which are designed to be filled with the foam resin. The foam resin may fill up only a part of the swing arm S, for example, in the body portion 20 and in the vicinity thereof where resonance is easily generated.

In case the foam resin fills up only a part of the hollow portion of the swing arm S, a wall may be previously formed, when the swing arm S is molded, between a part of the hollow portion that the foam resin fills up and a part of the hollow portion that the foam resin does not fill up, thereby to appropriately fill up the desired part with foam resin.

According to the embodiment, in addition to the material introducing jig (not shown), a steam injecting jig 34 and a steam absorbing jig 35 are used as shown in Fig. 17. The steam injecting jig 34 has an opening 34a to be connected to a hose extending from the steam generator and a steam pipes 34b to be inserted into the openings 10a or openings 20a of the swing arm S. The steam pipes 34b are provided with apertures steam injecting.

The steam absorbing jig 35 is used to absorb surplus steam injected into the swing arm S, and has the opening 35a to be connected to an external hose and absorbing pipes 35b to be inserted into the openings 10a or openings 20a of the swing armS. The steam absorbing pipes 35b are provided with apertures at which the steam is absorbed.

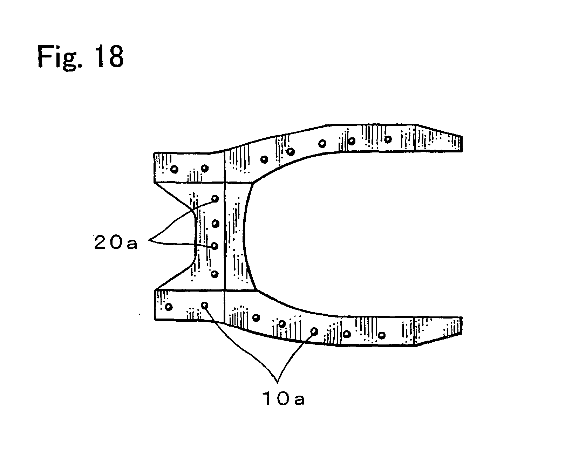

To fill with the foam resin with the method described in this embodiment, the swing arms has, as shown in Fig. 18, openings 10a and openings 20a into which the pipes of the steam injecting jig 34 and the steam absorbing jig 35 are inserted.

The method of this embodiment for filling with the foam resin is characterized by a steam heating process. Namely, as shown in Fig. 17, when heating the foaming beads which have been introduced into the swing arm S, the steam pipes 34b of the steam injecting jig 34 and the steam absorbing pipes 35b of the steam absorbing jig 35 are inserted into the openings 10a or openings 20a of the swing arm S, and the injection and the absorption of steam are simultaneously carried out.

Thus, according to the heating method of this embodiment, the steam may be equally supplied within the swing arm S. The water produced by cooling the steam is absorbed. The surplus water is prevented from adhering to the interior of the swing arm S.

As shown in Fig. 18, in case the swing arm S can be formed with openings at a certain spacing, a chamber system is preferable instead of the steam injecting and absorbing system by use of the steam injecting jig 34 and steam absorbing jig 35 as shown in Fig. 17. With employment of this chamber system, the work to insert the steam pipe and the absorbing pipe may be eliminated, and the operation efficiency may be increased. Further, the quality may be improved if the steam openings are evenly provided.

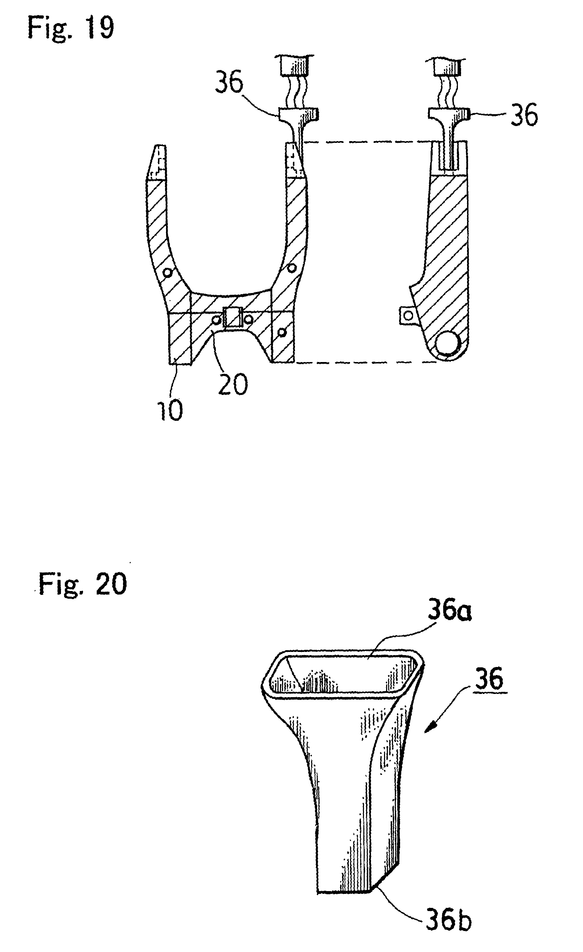

Figs. 19 and 20 show explanatory views of another method for filling up the swing arm S with the foam resin. According to this embodiment, the swing arm S is filled with foam resin such as urethane foam instead of using the foaming resin beads as mentioned above. In this embodiment, the foam resin to be used may be urethane foam, gum-based foam, and urethane foam having gum-based particles or the like.

The raw material for the foam resin is introduced by use of the jig 36 as shown in Fig. 20. The jig 36 has an opening 36a for receiving the foam material and an opening 36b for exhausting the foam material to the swing arm S. The jig 36 may be arranged at a recess provided adjacent to the member mounting opening 10e and may introduce the foam material through the member mounting opening 10e.

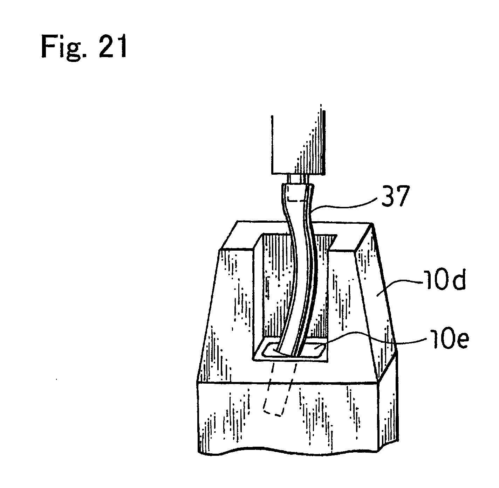

Further, Fig. 21 shows another embodiment in which the foam material may be directly injected by means of a float or a tube. Namely, instead of the jig 36, a tube 37 is attached to the end of an injector and the other end of the tube 37 is inserted into the hollow portion through the member mounting opening 10e to inject the foam resin.

According to the present embodiment, the foam material used is, for example, urethane foam, gum-based foam, or urethane foam having gum-based particles. Of course, an optional combination of these foam resins may be used.

As to the cooling and drying of the swing arm S after it has been filled with the foam resin, the swing arm S may be allowed to spontaneously cool and dry as in the other embodiments. Vacuum cooling will make it possible to cool and dry efficiently and in a short time.

Further, according to the embodiment, the foam material is foamed in the hollow portion of the swing arm S. It is, however, possible to fill up the hollow portion with a previously molded foam material. In this case, the foam material is previously molded and made into chips, and then the chips are used to fill up the hollow portion. The chips may be obtained from unneeded molded foam products or may be the waste chips produced when molding the foam material. Thus, a waste material may be recycled.

### INDUSTRIAL FIELD OF APPLICATION

According to this invention, since the hollow portion of the arm portions or the body portion constituting the swing arm is filled with the foam resin, the foam resin will absorb the vibrations transmitted to the swing arm from an engine, thereby reducing the vibrations of the arm portions and body portion and preventing resonance.

The foam resin used to fill the hollow portions can be, for example, urethane foam, polypropylene foam, polystyrene foam, polyethylene foam, acrylonitrile-stylene resin foam These foamresins have excellent resistance to the heat generated from the engine and to oil products such as gasoline and are also excellent in terms of cost and endurance. Further, these foam resins, which inherently have different qualities, may be optionally used in accordance with the structure of the two-wheeled motor vehicle, the volume of the engine or other requirements.

## Claims

1. A swing arm for a two-wheeled motor vehicle having a pair of arm portions pivotally mounted to the frame of the motorcycle body and a body portion located to connect the pair of arms, characterized in that said arm portions and said body portion have hollow portions formed therein, at least a part of said hollow portions is filled with foam resin.

2. The swing arm for a two-wheeled motor vehicle as defined in claim 1, characterized in that said foam resin may be urethane foam, polypropylene foam, polystyrene foam, polyethylene foam, acrylonitrile-stylene resin foam, gum-based foam, or urethane foam having gum-based particles.

3. The swing arm for a two-wheeled motor vehicle as defined in claim 1, characterized in that said foam resin is a combination of two or more of the following: urethane foam, polypropylene foam, polystyrene foam, polyethylene foam, acrylonitrile-stylene resin foam, gum-based foam, and urethane foam having gum-based particles.

4. The swing arm for a two-wheeled motor vehicle as defined in claim 2, wherein the density of said urethane foam is from 0.010 to 0.100.

5. The swing arm for a two-wheeled motor vehicle as defined in claim 3, characterized in that the density of said urethane foam is from 0.010 to 0.100.

6. The swing arm for a two-wheeled motor vehicle as defined in claim 2, characterized in that the density of said urethane foam having gum-based particles is from 0.050 to 0.500.

7. The swing arm for a two-wheeled motor vehicle as defined in claim 3, characterized in that the density of said urethane foam having gum-based particles is from 0.050 to 0.500.

8. The swing arm for a two-wheeled motor vehicle as defined in claim 2, characterized in that, said polypropylene foam, said polystyrene foam, said polyethylene foam, and said acrylonitrile-stylene resin foam of said foam resin are formed by foaming resin beads.

9. The swing arm for a two-wheeled motor vehicle as defined in claim 3, characterized in that said polypropylene foam, said polystyrene foam, said polyethylene foam, and said acrylonitrile-stylene resin foam of said foam resin are formed by foaming resin beads.

10. The swing arm for a two-wheeled motor vehicle as defined in claim 1, characterized in that said foam resin is the chipped form of previously molded urethane foam, polypropyrene foam, polystyrene foam, polyethylene foam, acrylonitrile-stylene resin foam, gum-based foam, or urethane foam having gum-based particles.

11. The swing arm for a two-wheeled motor vehicle as defined in claim 1, characterized in that said foam resin is a combination of the chipped form of two or more of the following: previously molded urethane foam, polypropyrene foam, polystyrene foam, polyethylene foam, acrylonitrile-stylene resin foam, gum-based foam, and urethane foam having gum-based particles.

12. The swing arm for a two-wheeled motor vehicle as defined in claim 1, characterized in that a wall is provided between a portion filled with said foam resin and a portion that is not filled with said foam resin.

13. A method for producing a swing arm for a two-wheeled motor vehicle having an arm portion and a body portion, both of which have a hollow portion, the hollow portion being at least partly filled with a foam resin,
characterized by at least,
filling up at least a part of said hollow portion with the raw material of a foam resin; and
foaming said raw.

14. The method for producing a swing arm for a two-wheeled motor vehicle as defined in claim 13, characterized in that said raw material of the foam resin is introduced at a threaded opening by which said swing arm is mounted to said two-wheeled motor vehicle.

15. The method for producing a swing arm for a two-wheeled motor vehicle as defined in claim 13, characterized in that said raw material of the foam resin is introduced at an opening provided at the end of said arm portion.

16. The method for producing a swing arm for a two-wheeled motor vehicle as defined in claim 14, characterized in that the openings other than the opening at which said raw material of the foam resin is introduced are closed by means of a mesh sheet.

17. The method for producing a swing arm for a two-wheeled motor vehicle as defined in claim 15, characterized in that said opening provided at said end of said arm portion is closed by means of said mesh sheet.

18. A method for producing a swing arm for a two-wheeled motor vehicle having an arm portion and a body portion, both of which have a hollow portion, the hollow portion being at least partly filled with a foam resin,
characterized by at least;
filling at least a part of said hollow portion at the end of said arm portion with a previously molded foam material.

19. The method for producing a swing arm for a two-wheeled motor vehicle as defined in claim 18, characterized in that said foam material may be urethane foam, polypropyrene foam, polystyrene foam, polyethylene foam, acrylonitrile-stylene resin foam, gum-based foam, or urethane foam having gum-based particles.

20. The method for producing a swing arm for a two-wheeled motor vehicle as defined in claim 18, characterized in that said foam material is beads of, polypropylene foam, polystyrene foam, polyethylene foam, acrylonitrile-stylene resin foam.

21. The method for producing a swing arm for a two-wheeled motor vehicle as defined in claim 18, characterized in that said foam material is a combination of two or more of the following: urethane foam, polypropylene foam, polystyrene foam, polyethylene foam, acrylonitrile-stylene resin foam, gum-based foam, and urethane foam having gum-based particles.

22. The method for producing a swing arm for a two-wheeled motor vehicle as defined in claim 18, characterized in that said foam material is a combination of beads of two or more of the following: polypropylene foam, polystyrene foam, polyethylene foam, and acrylonitrile-stylene resin foam.
